# FASCICULE DE BREVET EUROPEEN

(11) **EP 0 891 105 B1**
(45) Date de publication et mention de la délivrance du brevet: **25.05.2005**
(21) Numéro de dépôt: 98401522.2
(22) Date de dépôt: 22.06.1998
(51) Int. Cl.: H04Q 1/14, H02B 1/20

(54) **Colonne de répartiteur de lignes téléphoniques à rails et à entretoises coulissantes et auto-bloquantes**
Fernsprecherverteilerleiste mit schienen und selbstsichernden schiebbaren Abstandelementen
Upright frame for telephone distributing using rails and selflocking sliding spacers

(30) Priorité: 07.07.1997 FR 9708603
(43) Date de publication de la demande: 13.01.1999
(73) Titulaire: Nexans, 75008 Paris (FR)
(72) Inventeur: Maurice, Denis, 08150 Rimogne (FR)
(74) Mandataire: Feray, Valérie

(56) Documents cités:
- EP-A- 0 304 393
- EP-A- 0 637 177
- DE-A- 1 490 790
- FR-A- 2 276 754

## Description

L'invention concerne une colonne de répartiteur de lignes téléphoniques comprenant deux rails profilés et au moins une entretoise fixée aux deux rails et les maintenant parallèles à une direction longitudinale.

Une telle colonne est utilisée pour relier des lignes téléphoniques de câbles d'entrée à des lignes téléphoniques de câbles de sortie. De manière connue, la colonne comprend deux porteurs ou deux rails s'étendant dans une direction longitudinale par exemple verticale. Des réglettes de raccordement sont montées sur les deux rails et reçoivent les lignes téléphoniques des câbles d'entrée et de sortie. Compte tenu du grand nombre de réglettes que comporte une colonne, le montage ou le démontage des réglettes est effectué en général par pression élastique sur les rails. Ce mécanisme est simple et rapide et n'impose pas de positions fixes de montage des réglettes.

Le document EP 0 304 393 A2 décrit une colonne de ce type, dans laquelle deux entretoises sont vissées aux extrémités de deux tubes porteurs pour les maintenir écartés l'un par rapport à l'autre. Il faut noter cependant que le respect de l'écartement des deux tubes au moyen des deux entretoises ne semble pleinement efficace que pour une colonne de longueur relativement limitée. Une variation de l'écartement des porteurs notamment au niveau de la moitié de la colonne peut gêner voire empêcher le montage ou le démontage des réglettes.

Le but de l'invention est de fournir une colonne de répartiteur de lignes téléphoniques qui allie un montage et un démontage simples et rapides des réglettes de raccordement avec un maintien de l'écartement des deux porteurs sur toute la longueur de la colonne.

A cet effet, l'invention a pour objet une colonne de répartiteur de lignes téléphoniques comprenant deux rails profilés et au moins une entretoise fixée aux deux rails et les maintenant parallèles à une direction longitudinale, caractérisée en ce que deux cales faisant partie intégrante de l'entretoise sont montées dans deux glissières principales longitudinales formées dans les deux rails et sont alignées suivant un axe perpendiculaire à la direction longitudinale, une rotation d'un quart de tour de l'entretoise autour de l'axe enclenchant le coulissement ou le blocage des cales dans les glissières principales.

Il en résulte que l'entretoise maintient un écartement entre les deux rails profilés en tout point de la colonne où elle est fixée, ce point de fixation étant un point quelconque de la colonne. Plusieurs entretoises distribuées régulièrement entre les rails profilés permettent ainsi de garantir un écartement sur toute la longueur de la colonne.

D'autres caractéristiques et avantages de l'invention apparaîtront à la lecture de la description illustrée par les dessins.
La figure 1 est une vue en perspective d'une colonne de répartiteur de lignes téléphoniques selon l'invention.
La figure 2 est en une vue en coupe transversale de deux rails et d'une entretoise de la colonne.
La figure 3 est une vue en perspective d'une entretoise.
La figure 4 est une vue en perspective de la colonne sur laquelle est monté en face avant un anneau de passage des lignes téléphoniques.
La figure 5 est une vue en perspective de la colonne sur laquelle sont montés en face arrière deux anneaux de passage des lignes téléphoniques.
La figure 6 est une vue en coupe transversale d'un anneau de passage de lignes téléphoniques.
La figure 7 est une vue en perspective de la colonne sur laquelle sont montés deux supports rectangulaires orientables et un doigt de support des lignes téléphoniques.

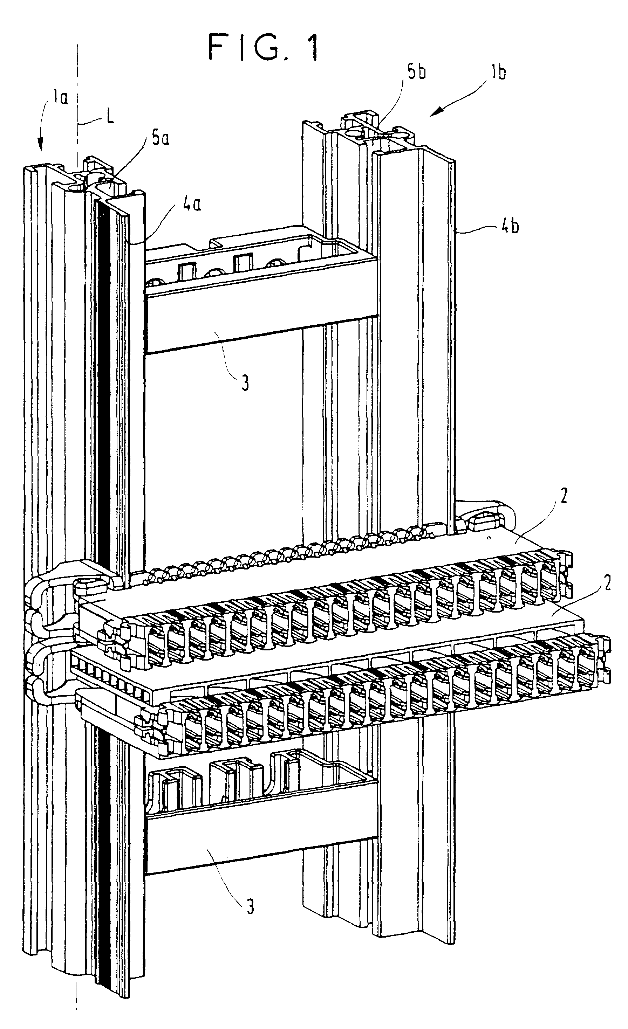

La colonne de répartiteur de lignes téléphoniques, figure 1, comprend deux rails profilés 1a et 1b. Deux entretoises identiques 3 sont fixées aux deux rails qu'elles maintiennent parallèles à une direction longitudinale L. Deux réglettes de raccordement identiques 2 connues en elles-mêmes sont montées par pression élastique sur deux ailes 4a et 4b appartenant respectivement aux deux rails la et 1b. Il faut remarquer que les ailes 4a et 4b permettent de monter des réglettes de différentes hauteurs parallèlement à la direction longitudinale L.

Dans la suite de la description de l'invention, la colonne porte les réglettes sur une face avant opposée à une face arrière. Un même élément décrit dans plusieurs figures conserve la même référence.

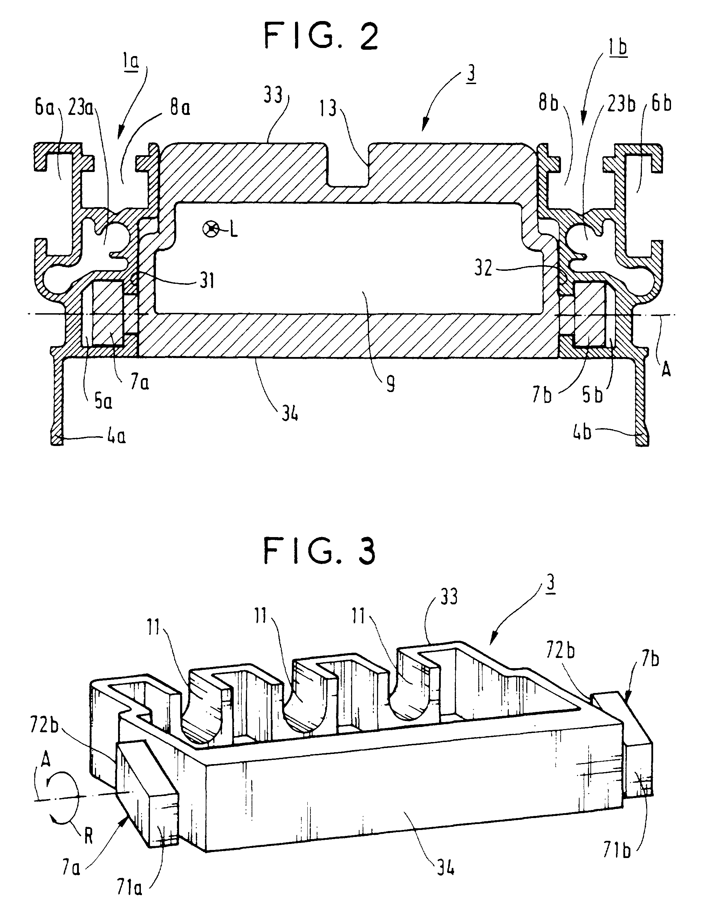

Chaque rail comprend une glissière principale respectivement 5a et 5b qui s'étend parallèlement à la direction longitudinale L. En vue de coupe transversale, figure 2, les glissières principales ont une section sensiblement rectangulaire. Deux cales 7a et 7b faisant partie intégrante de l'entretoise 3 sont alignées suivant un axe A perpendiculaire à la direction longitudinale L. De préférence, les deux cales, figures 3, sont deux parallélépipèdes dont la section est un losange. Par une rotation R d'un quart de tour de l'entretoise 3 autour de l'axe A, deux faces opposées 71a et 72a, respectivement 71b et 72b des cales 7a et 7b viennent en contact avec la glissière correspondante 5a ou 5b pour bloquer les cales. Une rotation en sens opposé d'un quart de tour de l'entretoise autour de l'axe A libère les cales pour leur permettre de coulisser dans les glissières principales.

Selon un mode particulier de réalisation, l'entretoise a la forme d'un cadre sensiblement rectangulaire qui comprend, dans le plan de coupe transversal de la figure 2, quatre bords dont deux bords 31 et 32 opposés sont en contact avec les deux rails et deux bords opposés 33 et 34 sont perpendiculaires aux deux rails. Les quatre bords de l'entretoise définissent une ouverture centrale 9 qui autorise le passage des lignes téléphoniques du répartiteur dans l'intervalle existant entre les deux rails de la colonne. Ainsi, le câblage du répartiteur est réalisé avec un encombrement dû aux câbles réduit. Il faut noter que les cales parallèlépipédiques à section en losange permettent d'introduire l'entretoise dans les glissières principales de deux façons qui se déduisent l'une de l'autre par une rotation de l'entretoise hors des glissières principales d'un demi-tour autour de l'axe A. La rotation d'un demi-tour permute les deux bords 33 et 34 opposés du cadre formant l'entretoise par rapport aux faces avant et arrière de la colonne.

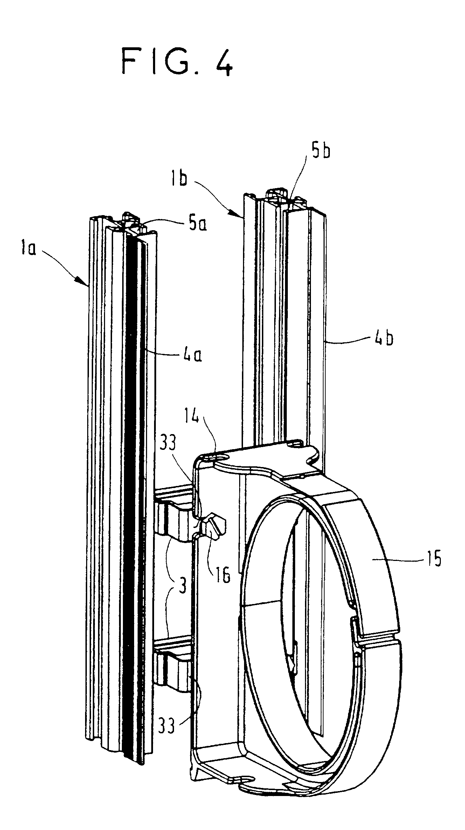

Des ouvertures latérales 11 sont ménagées, figure 3, sur l'un des deux bords de l'entretoise perpendiculaires aux rails, par exemple sur le bord 33, pour permettre le passage d'éléments de fixation comme par exemple des vis. Ces ouvertures offrent la possibilité d'une part d'amarrer la colonne à un mur de support, les ouvertures étant mises en coïncidence avec des vis solidaires du mur en faisant coulisser l'entretoise dans les glissières principales et en la bloquant par rotation d'un quart de tour autour de l'axe A. De cette manière, des positions prédéterminées de coïncidence entre les vis du mur et les ouvertures latérales d'un bord de l'entretoise ne sont plus requises pour la fixation de la colonne.
D'autre part, les ouvertures latérales 11 offrent la possibilité de fixer sur l'entretoise des équipements accessoires tels des anneaux de passage des lignes téléphoniques. Sur la figure 4, un anneau 15 connu en soi, est vissé 16 sur un bord 33 de deux entretoises identiques 3, le bord 33 étant disposé sur la face avant de la colonne. L'anneau 15 permet un brassage ordonné des câbles ou des lignes téléphoniques du répartiteur.

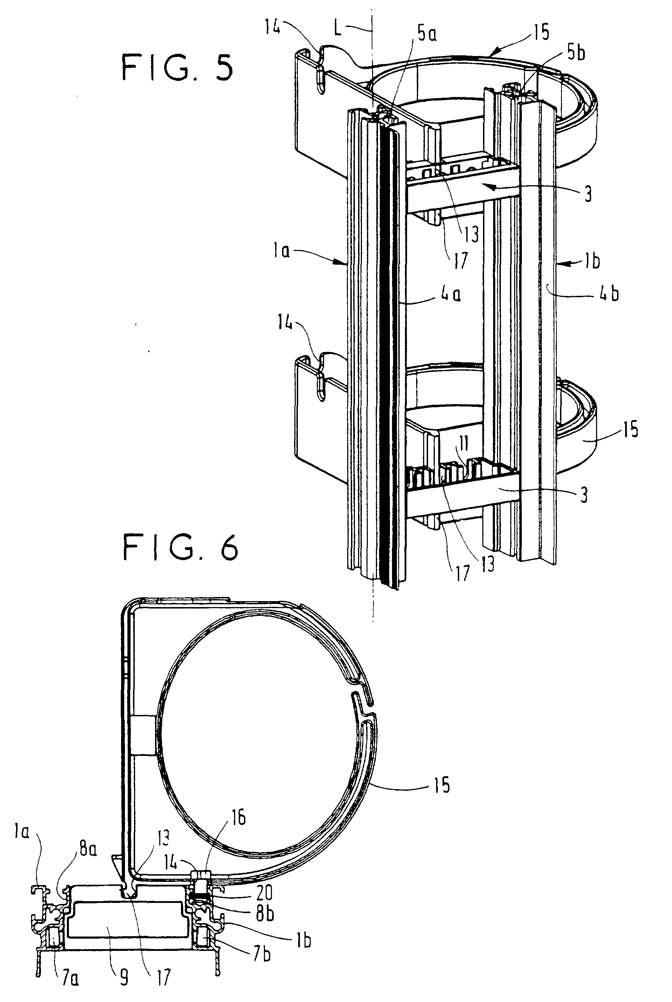

Deux anneaux identiques à celui décrit précédemment sont montés, figure 5, sur un bord 33 de deux entretoises identiques 3, le bord étant disposé sur la face arrière de la colonne. Les deux anneaux sont disposés perpendiculairement à la direction longitudinale L et sont séparés d'un pas réglable par le coulissement des entretoises le long des rails. Une rainure de guidage 13, visible sur les figures 2 et 6, est formée dans le bord 33 pour recevoir une porté saillante 17 de l'anneau 15 et offrir ainsi un guide pour la fixation de l'anneau sur le bord 33. L'anneau 15 comporte une échancrure 14 pour permettre le passage d'un élément de fixation solidaire d'un mur de support de la colonne, par exemple une vis.

Il faut noter que les anneaux décrits précédemment sont fixés sur un bord de l'entretoise disposé sur la face avant ou arrière de la colonne. De cette façon, les lignes téléphoniques ou les câbles supportées par les anneaux cheminent jusqu'aux réglettes de raccordement par la face avant ou par la face arrière de la colonne, permettant ainsi un câblage sur les deux faces.

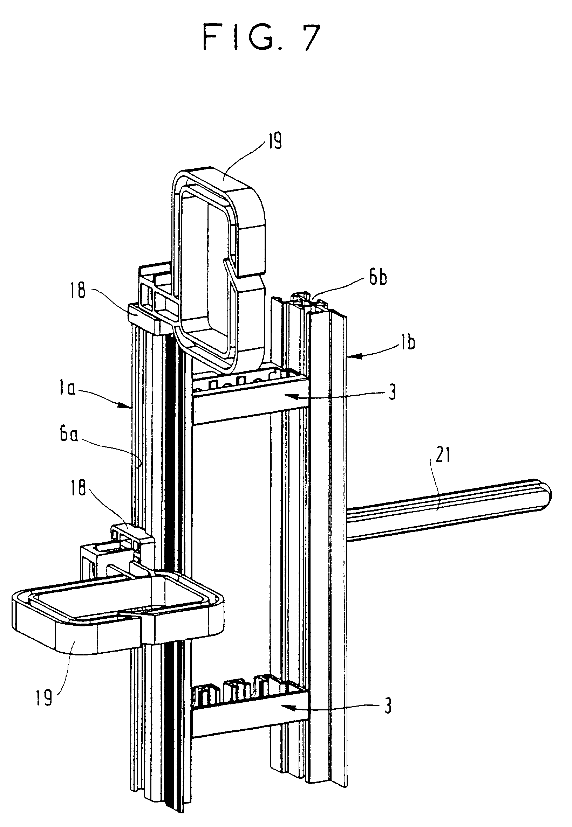

Selon un autre mode particulier de réalisation, chaque rail profilé comprend au moins une glissière secondaire qui s'étend selon la direction longitudinale L. Sur la figure 2, les deux rails 1a et 1b sont représentés avec deux glissières latérales 6a et 6b, et deux glissières arrières 8a et 8b, de section sensiblement rectangulaire. Ces glissières secondaires servent à fixer sur les rails des équipements accessoires. Sur la figure 6, une vis 16 traverse une échancrure 14 d'un anneau 15 pour permettre sa fixation au rail 1b par l'intermédiaire d'un écrou 20 logé dans la glissière arrière 8b. D'autres équipements accessoires sont aussi montés sur les rails de la colonne comme par exemple des supports rectangulaires orientables ou des doigts de support des lignes téléphoniques. Sur la figure 7, un support rectangulaire orientable 19 est fixé sur le rail 1a par l'intermédiaire d'une embase 18 au moyen d'une vis de serrage et d'un écrou logé dans la glissière latérale 6a. D'une manière avantageuse, l'écrou a une forme de losange pour coulisser dans la glissière latérale 6a et se bloquer par une rotation d'un quart de tour autour de l'axe défini par la vis de serrage. De même, un doigt de support 21 s'étendant dans une direction axiale est monté sur la glissière latérale 6b du rail 1b, le doigt de support 21 étant conformé à une extrémité en une cale parallélépipédique avec une section en losange qui coulisse à l'intérieur de la glissière latérale 6b et se bloque par une rotation d'un quart de tour autour de la direction axiale du doigt.

Les deux rails profilés de la colonne selon l'invention possèdent à l'une de leurs extrémités un logement 23a ou 23b de vis auto-taraudeuse, visible sur la figure 2. Figure 7, un support rectangulaire orientable 19 est ainsi fixé à une extrémité d'un rail profilé la par l'intermédiaire d'une embase 18 au moyen d'une vis auto-taraudeuse vissée dans le logement 23a.

## Revendications

1. Une colonne de répartiteur de lignes téléphoniques comprenant deux rails profilés (1a, 1b) et au moins une entretoise (3) fixée aux deux rails et les maintenant parallèles à une direction longitudinale (L), **caractérisée en ce que** deux cales parallélépipédiques dont la section est un losange (7a, 7b) et faisant partie intégrante de l'entretoise (3) sont montées dans deux glissières principales longitudinales (5a, 5b) formées dans les deux rails (1a, 1b) et sont alignées suivant un axe (A) perpendiculaire à la direction longitudinale (L), une rotation (R) d'un quart de tour de l'entretoise (3) autour de l'axe (A) enclenchant le coulissement ou le blocage des cales dans les glissières principales (5a, 5b).

2. La colonne selon la revendication 1, dans laquelle l'entretoise (3) a la forme d'un cadre définissant une ouverture centrale (9).

3. La colonne selon la revendication 2, dans laquelle des ouvertures latérales (11) sont ménagées sur un bord (33) de l'entretoise (3).

4. La colonne selon l'une des revendications 2 à 3, dans laquelle une rainure de guidage (13) est formée dans un bord (33) de l'entretoise (3).

5. La colonne selon l'une des revendications précédentes, dans laquelle chaque rail profilé (1a, 1b) possède au moins une glissière secondaire longitudinale (6a, 6b, 8a, 8b).

6. La colonne selon la revendication 5, dans laquelle un anneau (15) est fixé à un rail profilé (1b) de la colonne par vissage à travers un écrou (20) ayant une forme de losange et logé dans une glissière secondaire (8b) du rail profilé (1b).

7. La colonne selon l'une des revendications 5 ou 6, dans laquelle un doigt de support (21) s'étendant dans une direction axiale est fixé à un rail profilé (1b) de la colonne au moyen d'une cale parallélépipédique avec une section en losange formée à une extrémité du doigt de support et logée à l'intérieur d'une glissière secondaire (6b) du rail profilé (1b).

8. La colonne selon l'une des revendications 1 à 7, dans laquelle un rail profilé (1a, 1b) comprend un logement (23a, 23b) pour une vis auto-taraudeuse.

9. La colonne selon l'une des revendications précédentes, dans laquelle chaque rail profilé (1a, 1b) possède une aile de fixation (4a, 4b) de réglettes de raccordement de lignes téléphoniques.

## Patentansprüche

1. Fernsprecherverteilerleiste mit zwei Profilschienen (1a, 1b) und mindestens einem Abstandelement (3), das an den beiden Schienen befestigt ist, und sie in Längsrichtung (L) parallel hält, **dadurch gekennzeichnet, dass** zwei quaderförmige Keile mit rhombusförmigem Querschnitt (7a, 7b), die ein integrierter Bestandteil des Abstandelementes (3) sind, in zwei längsverlaufenden Hauptstellschienen (5a, Sb) montiert sind, welche in den beiden Schienen (1a, 1b) gebildet wenden, und entlang einer Achse (A) senkrecht zur Längsrichtung (L) ausgerichtet sind, wobei die Verschiebung oder Blockierung der Keile in den Hauptstellschienen (5a, 5b) durch eine Viertelumdrehung (R) des Abstandelementes (3) um die Achse (A) herum verriegelt wird.

2. Leiste nach Anspruch 1, bei der das Abstandelement (3) die Form eines Rahmens besitzt, der eine zentrale Öffnung (9) definiert.

3. Leiste nach Anspruch 2, bei der die seitlichen Öffnungen (11) an einer Kante (33) des Abstandelementes (3) ausgespart sind.

4. Leiste nach einem der Ansprüche 2 bis 3, bei der eine Führungsnut (13) an einer Kante (33) des Abstandelementes (3) gebildet wird.

5. Lelste nach einem der vorhergehenden Ansprüche, wobei jede Profilschiene (1a, 1b) mindestens eine zweite, längsverlaufende Stellschiene (6a, 6b, 8a, 8b) besitzt.

6. Leiste nach Anspruch 5, wobei ein Ring (15) an einer Profilschiene (1b) der Leiste durch Verschrauben mit einer Schraubenmutter (20), welche die Form eines Rhombus besitzt, und die sich in einer zweiten Stellschiene (8b) der Profilschiene (1b) befindet, befestigt ist.

7. Leiste nach einem der Ansprüche 5 oder 6, bei der ein in axialer Richtung verlaufender Aufnahmezapfen (21) an einer Profilschiene (1b) der Leiste befestigt ist, und zwar mittels eines quaderförmigen Keils mit rhombusförmigem Querschnitt, der an einem Ende des Aufnahmezapfens gebildet wird, und im Innern einer zweiten Stellschiene (6b) der Profilschiene (1b) untergebracht ist.

8. Leiste nach einem der vorhergehenden Ansprüche 1 bis 7, bei der eine Profilschiene (1a, 1b) eine Aufnahme (23a, 23b) für eine selbstschneidende Gewindeschraube besitzt.

9. Leiste nach einen der vorhergehenden Ansprüche, bei der jede Profilschiene (1a, 1b) einen Befestigungsflügel (4a, 4b) für die Buchsemleisten der Fernsprechleitungen besitzt.

## Claims

1. A telephone line distribution frame column comprising two profiled rails (1a, 1b) and at least one spacer (3) attached to both rails and maintaining them parallel to a longitudinal direction (L), **characterized in that** two parallelepipedous shims, the section of which is a rhombus (7a, 7b) and being an integral part of the spacer (3), are mounted in two main longitudinal slides (5a, 5b) formed in both rails (1a, 1b) and are aligned along an axis (A) perpendicular to the longitudinal direction (L), a quarter-turn rotation (R) of the spacer (3) around the axis (A) engaging the sliding or locking of the shims in the main slides (5a, 5b).

2. The column according to claim 1, wherein the spacer (3) has the shape of a frame defining a central aperture (9).

3. The column according to claim 2, wherein side apertures (11) are provided on an edge (33) of the spacer (3).

4. The column according to any of claims 2 to 3, wherein a guiding groove (13) is formed in an edge (33) of the spacer (3).

5. The column according to any of claims, wherein each profiled rail (1a, 1b) has at least one longitudinal secondary slide (6a, 6b, 8a, 8b).

6. The column according to claim 5, wherein a ring (15) is attached to a profiled rail (1b) of the column by fastening with a screw through a nut (20) having a rhombus shape and housed in a secondary slide (8b) of the profiled rail (1b).

7. The column according to any of claims 5 or 6, wherein a supporting finger (21) extending in an axial direction is attached to a profiled rail (1b) of the column by means of a parallelepipedous shim with a rhombus section formed at one end of the supporting finger and housed within a secondary slide (6b) of the profiled rail (1b).

8. The column according to any of claims 1 to 7, wherein a profiled rail (1a, 1b) comprises a housing (23a, 23b) for a self-tapping screw.

9. The column according to any of the preceding claims, wherein each profiled rail (1a, 1b) has a wing for attaching (4a, 4b) connecting blocks for telephone lines.
